# EUROPÄISCHE PATENTSCHRIFT

(11) **EP 1 250 294 B1**
(45) Veröffentlichungstag und Bekanntmachung des Hinweises auf die Patenterteilung: **23.07.2003**
(21) Anmeldenummer: 01903640.9
(22) Anmeldetag: 11.01.2001
(51) Int. Cl.: C03B 5/02, C03B 5/425, C03B 5/44, F27B 14/16

(54) **VORRICHTUNG ZUM ERSCHMELZEN ODER LÄUTERN VON ANORGANISCHEN SUBSTANZEN**
DEVICE FOR MELTING OR PURIFYING OF INORGANIC SUBSTANCES
DISPOSITIF POUR FAIRE FONDRE OU AFFINER DES SUBSTANCES INORGANIQUES

(30) Priorität: 19.01.2000 DE 10002019
(43) Veröffentlichungstag der Anmeldung: 23.10.2002
(73) Patentinhaber: Schott Glas, 55122 Mainz (DE); CARL-ZEISS-STIFTUNG trading as SCHOTT GLAS, 55122 Mainz (DE)
(72) Erfinder: KUNERT, Christian, 55122 Mainz (DE); KOLBERG, Uwe, 55252 Mainz-Kastel (DE); RÖMER, Hildegard, 61184 Karben (DE)
(74) Vertreter: Dr. Weitzel & Partner
(86) Internationale Anmeldenummer: EP0100272
(87) Internationale Veröffentlichungsnummer: WO01053222

(56) Entgegenhaltungen:
- EP-A- 0 079 266
- WO-A-01/14262
- WO-A-01/14265
- GB-A- 977 546
- GB-A- 1 221 909

## Beschreibung

Die Erfindung betrifft eine Vorrichtung zum Erschmelzen oder Läutern von Gläsern oder Glaskeramiken.

Solche Vorrichtungen sind in Gestalt sogenannter Skulltiegel bekanntgeworden. Sie umfassen eine Tiegelwandung. Diese ist im allgemeinen zylindrisch. Sie ist aus einem Kranz von vertikalen Metallrohren aufgebaut. Zwischen einander benachbarten Rohren verbleiben Schlitze. Auch der Tiegelboden kann aus Metallrohren aufgebaut sein. Er kann aber auch aus Feuerfestmaterial bestehen. An ihren Enden sind sie an vertikale Rohre zur Kühlmittelzufuhr beziehungsweise Kühlmittelabfuhr angeschlossen.

Die Beheizung erfolgt durch eine Induktionsspule, die die Tiegelwandung umgibt, und über welche Hochfrequenzenergie in den Tiegelinhalt einkoppelbar ist.

Ein solcher Skulltiegel ist beispielsweise aus EP 0 528 025 B1 bekanntgeworden.

Ein Skulltiegel arbeitet wie folgt: der Tiegel wird mit Gemenge oder Scherben oder einem Gemisch hieraus befüllt. Das Glas, beziehungsweise die Schmelze müssen zunächst vorgeheizt werden, um eine gewisse Mindestleitfähigkeit zu erreichen. Das Vorheizen geschieht häufig durch Brennerbeheizung. Ist die Kopplungstemperatur erreicht, so kann die weitere Energiezufuhr über die Einstrahlung von Hochfrequenzenergie erfolgen. Auch während des Betriebes kann es in speziellen Fällen vorteilhaft sein, die Schmelze zusätzlich zu dem Beheizen mittels Hochfrequenzenergie durch Brenner zu beheizen, die auf die Schmelze von oben her einwirken, oder durch heiße Abgase. Insbesondere bei der Verwendung eines Skulltiegels zum Läutern ist dies in manchen Fällen notwendig. Ist nämlich die Oberflächenschicht kalt und entsprechend höher viskos, so werden Blasen daran gehindert, aus der Schmelze auszutreten oder es kommt zu Schaumbildung.

Das Skull-Prinzip läßt sich auch bei anderen Gefäßen als bei Tiegeln anwenden. Siehe beispielsweise DE 199 39 782 A1. Hierbei sind mehrere Rohre U-förmig gestaltet und liegen nebeneinander, so daß sie eine nach oben offene, käfigartige Skull-Rinne miteinander bilden. Eine Induktionsspule umschlingt dabei diese Rinne derart, daß sich Windungsabschnitte entlang der Seitenwände der Rinne erstrecken.

Die Erfindung betrifft somit jegliche Art von Vorrichtung, bei der ein Gefäß aus einer Vielzahl von Metallrohren gebildet ist, die ihrerseits an ein Kühlmedium anschließbar sind, und bei denen Hochfrequenzenergie in den Gefäßinhalt eingekoppelt wird.

Die genannten Metallrohre bestehen im allgemeinen aus Kupfer. Dabei ergeben sich die folgenden Probleme:
Zum einen besteht die Gefahr, daß aus den Kupferrohren Kupfer in die Schmelze gelangt. Dies führt zu einem deutlichen Farbstich zufolge der Kupferverunreinigung.

Ein weiteres Problem besteht darin, daß aus dem Glas entweichende, gasförmige oder feste Komponenten wie zum Beispiel HF, P₂O₅, B₂O₃, SO₂, SO₃, Cl₂ sich auf dem gekühlten, nicht von der Schmelze bedeckten Teil des Tiegels niederschlugen und dort Korrosion hervorrufen. Dies führt zu einer Zerstörung des Tiegels sowie zu einer Verunreinigung der Schmelze.

Weiterhin ist ein Beseitigen von Glasresten beim Reinigen des Gefäßes aufwendig und mühevoll, da solche Glasreste hartnäckig an den Oberflächen der Metallrohre haften.

Der Erfindung liegt die Aufgabe zugrunde, eine Vorrichtung der genannten Art derart zu gestalten, daß Verunreinigungen der Glasschmelze durch das Material der Metallrohre unterbleibt, daß es zu keiner Korrosion kommt, und daß das Problem des Anhaftens von Glasschmelze nicht auftritt.

Diese Aufgabe wird durch die Merkmale von Anspruch 1 gelöst.

Bei der Lösung der gestellten Aufgabe waren zuvor verschiedene Wege eingeschlagen worden. Die Verwendung von Platin statt Kupfer ist nicht nur erheblich teurer, sondern auch keine perfekte Lösung bezüglich der Vermeidung von Verunreinigungen in der Glasschmelze. Der Gedanke, Kunststoffe zu verwenden, mußte wegen des niedrigen Schmelzpunktes solcher Materialien von vornherein als abwegig angesehen werden. Die Erfinder haben jedoch erkannt, daß Kunststoffe trotz ihrer niedrigen Erweichungstemperatur und trotz ihrer niedrigen Zersetzungstemperatur als Beschichtungswerkstoff sehr wohl in Betracht kommen und geeignet sind, die Probleme zu lösen. Wie sich in Versuchen zeigte, bewirkt nämlich die Kühlung der Metallrohre, daß die Kontakttemperatur zwischen dem Kunststoff der erfindungsgemäßen Kunststoffbeschichtung einerseits und der Glasschmelze andererseits unterhalb der Zersetzungstemperatur des Kunststoffes bleibt. Die Kunststoffbeschichtung war nach den Versuchen unversehrt geblieben. Das Schmelzgefäß konnte erneut verwendet werden.

Durch die erfindungsgemäße Kunststoffbeschichtung wird die wichtigste der oben genannten Teilaufgaben gelöst. Es kommt nämlich nicht zu einer Verunreinigung der Schmelze, Im konkreten Falle waren im Skull-Tiegel Alkali-Zink-Silicatgläser erschmolzen worden. Fasern, die aus diesem Glas hergestellt wurden, hatten eine extrem niedrige Dämpfung, was bedeutet, daß die Beschichtung das Eindifundieren von Kupfer aus dem Skull-Tiegel in die Schmelze verhindert hat. Bei einem Kontrollversuch waren unbeschichtete Kupferrohre verwendet worden. Diese führten zu einem erheblichen Farbstich durch Kupferverunreinigung.

Bei einem anderen Versuch wurden Phosphat- und Fluor-Phosphat-Gläser in einem erfindungsgemäß gestalteten Tiegel erschmolzen. Die Gläser wiesen eine hohe optische Reinheit auf, wie diese sonst nur in Platin-Schmelztiegeln zu erreichen ist. Darüber hinaus war die Schmelze frei von Platin-Teilchen, was bei Platin-Tiegeln naturgemäß nicht garantiert werden kann. Die Gläser waren hierbei geeignet für Hochenergie-Laseranwendungen. Erfindungsgemäße Vorrichtungen mit Kunststoffbeschichtung sind auch geeignet für Oxid-Salz- oder Metallschmelzen. Dabei wird der Fachmann die Parameter der Kühlung einerseits und der Kunststoffeigenschaften andererseits aufeinander abstimmen.

Die weitere wichtige Teilaufgabe der Vermeidung von Korrosion wird in perfekter Weise gelöst. Eine Korrosion tritt bei erfindungsgemäß beschichteten Kühlrohren nicht auf.

Bei Anwendung der erfindungsgemäßen Beschichtung kommt es auch zu keinem Anhaften von Glasresten. Es entfällt somit der Aufwand des Entfernens solcher Reste, so daß die Reinigung des Tiegels am Ende eines Schmelz- oder Läuterungsprozesses keine Probleme darstellt.

Ein weiterer, vorteilhafter Effekt der Erfindung liegt in folgendem: die erfindungsgemäße Schicht stellt eine elektrisch hervorragende Isolierung dar. Sie verhindert elektrische Überschläge zwischen einzelnen Tiegelbereichen. Dieser Effekt hat eine ganz wichtige wirtschaftliche Bedeutung. Er erlaubt eine Vergrößerung des Tiegels. Ist der Tiegel größer und kann somit ein höheres Volumen aufnehmen, so ist der Vorgang des Läuterns oder Schmelzens wirtschaftlicher. Normalerweise wurde eine maximale Tiegelhöhe dadurch gefunden, daß sich die in den Kühlfingern auftretenden Induktionsspannungen, wenn sie zu groß werden, über die Schmelze entladen. Dies führt zu Lichtbogenbildung und zur Zerstörung des Skull-Tiegels. Sind die Kühlfinger jedoch mit Teflon beschichtet, so können Induktionsspannungen auftreten, bevor Lichtbogenbildung einsetzt.

Bei einem praktischen Versuch lagen die folgenden Parameter vor:
Bei dem Tiegel handelte es sich um einen stehenden Skull-Tiegel aus Kupferrohren mit einer Wandstärke von 1 mm.
Die Beschichtung bestand aus einem hochfluorhaltigen Kunststoff.
Die Schichtdicke betrug 150 µ.
Die Erweichungstemperatur des Kunststoffes lag bei 300° Celsius.
Die Zersetzungstemperatur des Kunststoffes lag bei 450° Celsius.
Die Kupferrohre waren wassergekühlt.
Im Tiegel wurden Phosphat-, Fluorphosphat- und Alkali-Zink-Silicatgläser geschmolzen.
Die Schmelztemperatur lag bei bis zu 1500° Celsius.

Die Schichtdicke des Materiales darf nicht zu groß sein. Dies hat folgenden Grund: Kunststoff ist ja bekanntlich ein Wärmedämmwerkstoff und verhindert somit den Fluß von Wärme von der einen Seite zur anderen. Ist die Schicht zu dick, so kann dies dazu führen, daß der im Kontaktbereich mit dem Kunststoff befindlichen Schmelze nicht mehr genügend Wärme durch das im Metallrohr strömende Kühlmedium entzogen wird. Der genannte Bereich würde dann Temperaturen annehmen, die oberhalb der Zersetzungstemperatur des Kunststoffes liegen. Dies ist auch der Grund dafür, daß man statt des Metalls als Basismaterial der Rohre nicht generell Kunststoff nehmen kann. Es bedarf somit eines Verbundes aus einem inneren Metallrohr und einem äußeren Kunststoffrohr bei entsprechender Abstimmung der Dicke der Kunststoffschicht mit den Betriebsbedingungen des Prozesses. Dies gilt insbesondere, wie oben erwähnt, für die beim Prozeß herrschende Temperatur der Schmelze. Es bedarf somit als Basismaterial in jedem Falle eines gut leitenden Werkstoffes. Die Erfahrung hat bisher gezeigt, daß die Schichtdicke des Kunststoffes maximal wenige Millimeter betragen darf, im allgemeinen weniger als 1 mm.

Als Basismaterial der Rohre kommt, wie erwähnt, vor allem Kupfer in Betracht, aber auch Platin, Stahl, Reinmetalle, Aluminium oder Legierungen aus solchen Metallen.

Erfindungsgemäße Vorrichtungen sind für die folgenden Anwendungen besonders geeignet:
Für die Herstellung von Alkali-Zink-Silicatgläsern;
für die Herstellung von Phosphatgläsern;
für die Herstellung von Fluor-Phosphatgläsern;
für die Herstellung von Lanthanboratgläsern;
für die Herstellung von Gläsern, die bei der Herstellung korrosive Gase wie SO₂, SO₃, Cl₂ oder HF freisetzen;
für die Herstellung von Anlaufgläsern, die Schwefel-, Selen- und/oder Tellurverbindungen enthalten;
für die Herstellung von Gläsern, die beim Herstellungsprozeß mit elementaren Halogenen, insbesondere Chlor, durchmischt werden, beispielsweise zum Entfernen von gelöstem Wasser;
für die Herstellung von Oxidschmelzen, die bei der Abkühlung kristallisieren; für die Herstellung von aggressiven Gläsern.

## Patentansprüche

1. Vorrichtung für das Erschmelzen oder das Läutern von anorganischen Substanzen, insbesondere von Glas;
mit einer Mehrzahl von Metallrohren, die an ein Kühlmedium angeschlossen sind, und die derart nebeneinander liegen, daß sie ein Gefäß miteinander bilden;
mit einer Hochfrequenzspule zum Einkoppeln von Energie in den Gefäßinhalt, wobei
die Metallrohre mit einem Kunststoff beschichtet sind, dessen Zersetzungstemperatur unter der Temperatur der Schmelze liegt, und wobei das Kühlsystem derart gestaltet und angeordnet ist, daß die Temperatur der das Gefäß unmittelbar umgebenden Grenzschicht der Schmelze unterhalb der Zersetzungstemperatur des Beschichtungsmateriales liegt.

2. Vorrichtung nach Anspruch 1, **dadurch gekennzeichnet, daß** die Beschichtung eine Dicke von 250 µ oder weniger aufweist.

3. Vorrichtung nach Anspruch 1 oder 2, **dadurch gekennzeichnet, daß** das Beschichtungsmaterial ein fluorhaltiger Kunststoff ist.

4. Vorrichtung nach Anspruch 3, **dadurch gekennzeichnet, daß** das Beschichtungsmaterial Fluoralkoxy enthält.

5. Vorrichtung nach einem der Ansprüche 1 bis 4, **dadurch gekennzeichnet, daß** das Basismaterial der Metallrohre Kupfer ist.

## Claims

1. Apparatus for the melting or refining of inorganic substances, in particular of glass;
having a plurality of metal pipes which are connected to a cooling medium and lie next to one another in such a manner that together they form a vessel;
having a high-frequency coil for introducing energy into the contents of the vessel,
the metal pipes being coated with a plastic, the decomposition temperature of which is below the temperature of the melt, and
the cooling system being configured and arranged in such a manner that the temperature of the boundary layer of the melt which immediately surrounds the vessel is below the decomposition temperature of the coating material.

2. Apparatus according to Claim 1, **characterized in that** the coating has a thickness of 250 µ or less.

3. Apparatus according to Claim 1 or 2, **characterized in that** the coating material is a fluorine-containing plastic.

4. Apparatus according to Claim 3, **characterized in that** the coating material contains fluoroalkoxy.

5. Apparatus according to one of Claims 1 to 4, **characterized in that** the base material of the metal pipes is copper.

## Revendications

1. Dispositif pour la fusion ou l'affinage de substances inorganiques, de verre notamment;
avec une pluralité de tubes métalliques qui sont raccordés à un fluide de refroidissement et disposés les uns à côté des autres de façon à former ensemble un récipient ;
avec une bobine haute fréquence pour l'injection d'énergie dans le contenu du récipient,
les tubes métalliques étant recouverts d'une matière plastique dont la température de décomposition est inférieure à la température de la matière en fusion, et le système de refroidissement étant configuré et disposé de telle sorte que la température de la couche limite de substance en fusion entourant directement le récipient soit inférieure à la température de décomposition du matériau de revêtement.

2. Dispositif selon la revendication 1, **caractérisé en ce que** le revêtement présente une épaisseur de 250 µ ou moins.

3. Dispositif selon la revendication 1 ou 2, **caractérisé en ce que** le matériau de revêtement est une matière plastique fluorée.

4. Dispositif selon la revendication 3, **caractérisé en ce que** le matériau de revêtement contient un alcoxyle fluoré.

5. Dispositif selon l'une des revendications 1 à 4, **caractérisé en ce que** le matériau de base des tubes métalliques est du cuivre.
